Europäisches Patentamt

European Patent Office

Office européen des brevets

(19)

(11) Publication number: **0 149 276**
**B1**

# EUROPEAN PATENT SPECIFICATION

(12)

(45) Date of publication of patent specification: **16.03.88**

(51) Int. Cl.⁴: **B 28 B 7/36,** B 28 B 7/00

(21) Application number: **84201863.2**

(22) Date of filing: **14.12.84**

(54) Method for forming objects from a hardenable material in a mould in particular objects provided with ribs, such as open grids or grids closed on one side; as well as moulds adapted to be applied with this method.

(30) Priority: **16.12.83 NL 8304335**

(43) Date of publication of application:
**24.07.85 Bulletin 85/30**

(45) Publication of the grant of the patent:
**16.03.88 Bulletin 88/11**

(84) Designated Contracting States:
**AT BE CH DE FR GB IT LI LU NL SE**

(56) References cited:
**FR-A-2 195 935**
**US-A-1 958 184**

(73) Proprietor: **Veldhoen, George Gustaaf**
**Staartmolen 3**
**NL-3352 BA Papendrecht (NL)**
(73) Proprietor: **PAG Presswerk Aktiengesellschaft**
**Westuferstrasse 7**
**D-4300 Essen 11 (DE)**

(72) Inventor: **Veldhoen, George Gustaaf**
**Staartmolen 3**
**NL-3352 BA Papendrecht (NL)**
Inventor: **Nicolay, Albert**
**Schlehenweg 34**
**D-4270 Dorsten 19 (DE)**
Inventor: **Skowronnek, Jürgen**
**Ginsterstrasse 67**
**D-4281 Raesfeld-Erle (DE)**
Inventor: **Rademacher, Albrecht**
**Heinrich-von-Gemen-Strasse 29**
**D-4235 Schermbeck (DE)**

(74) Representative: **de Vries, Johannes Hendrik**
**Fokke et al**
**Octrooibureau Los en Stigter B.V. P.O. Box**
**20052**
**NL-1000 HB Amsterdam (NL)**

Courier Press, Leamington Spa, England.

## Description

The invention relates to a method for forming objects from a hardenable material in a mould, according to the preable of claim 1; as well as to a mould adapted to be applied with this method according to the preamble of claim 7.

FR—A—2 195 935 discloses a method and mould of this type. In this known method a mould is used wherein the lining is supported at its edge and bottom only. The lining has relatively thick side walls so that the lining is adapted to support itself and the weight of the hardenable material without deformation of the lining. Therefore, removing the objects from the mould will be difficult, and, moreover, the side walls of the lining may enclose one cavity only so that objects, such as open grids, cannot be manufactured with this known method and mould.

It is an object of the present invention to provide a method, with which it is even possible to manufacture complicated objects, in particular objects provided with ribs, such as open grids or grids closed on one side, in a simple and very quick manner, which objects, when formed in a mould would normally be very difficult to remove from the mould.

For this purpose the method for forming objects from a hardenable material in a mould, wherein the mould is provided with a deformable lining, which is held to the mould at least along its edge, in such a way that this flexible lining can be brought into two positions, i.e. into a first position, in which the mould is in a discharging or a filling position, and into a second position, in which the mould occupies a hardening position, in which hardening position of the mould the interior of the lining, which defines the mould cavity, corresponds with the external shape of the object to be formed, whilst in the discharging or the filling position of the mould both the internal space of the lining and its upper discharge or filling opening are considerably larger than in the hardening position of the mould; in the discharging or the filling position of the mould a subatmospheric pressure being exerted on the lower side of the lining, while in order to bring the mould into the hardening position this subatmospheric pressure is released, according to the invention is characterized in that a support core system accommodated in the mould is at least partially displaced upwardly when bringing the mould into the hardening position; the operation of the mould being such, that in the filling position of the mould the hardenable material is fed into the interior of the lining and subsequently the subatmospheric pressure on the lower side of the lining is released and the lining is brought into its second position by means of the at least partial upward displacement of the support core system, in which second position of the lining the mould is in the hardening position, whereafter, after sufficient hardening of the hardenable material, the mould is brought into the discharging position by means of the at least partial downward displacement of the support core system and the exertion of the subatmospheric pressure on the lower side of the lining, thus causing the lining to be brought back into its first position.

Due to the fact that with the method according to the invention the deformable lining has a much larger opening at the upper side in the filling position of the mould than in the hardening position of the mould, the supply of the hardenable material can very quickly and easily take place. Moreover, the hardenable material can comprise longer fibres than would be possible without enlargement of this opening in the filling position of the mould. Because of the application of these longer fibres the object formed obtains a greater strength while maintaining the same percentage of fibres. Therefore, according to the invention an optimal fibre length, or an optimal combination of fibre lengths can be chosen, while the size of the filling opening cannot form any obstruction.

After filling, the subatmospheric pressure on the lower side of the lining is released and the support core system is at least partially displaced upwardly. This causes the mould to be brought into the hardening position, in which the mould cavity defined by the interior of the lining, is completely filled with the hardenable material.

The possibility may be provided to discharge superfluous hardenable material from the mould in one place, while the remaining portion of the upper opening of the mould cavity is temporarily closed.

The flexible lining can be manufactured in such a way, that it will occupy the second position when no forces are exerted thereon, in which second position the mould is in the hardening position. Nevertheless it is also necessary in this case that the flexible lining is brought from the first position into the second position by means of the at least partially displaceable support core system, as the hardenable material which is fed into the lining, prevents the lining from independently returning to its second position corresponding with the hardening position of the mould, when the subatmospheric pressure is released.

After the hardenable material is sufficiently hardened to be discharged, the support core system is at least partially displaced downwardly and at the same time the subatmospheric pressure underneath the flexible lining is applied again. This causes this lining to be peeled from the object formed, which may take place within a few seconds, while furthermore much smaller forces are necessary than would normally be required for the discharging operation. This results in that it is already possible to discharge at an earlier stage of the hardening. Therefore, according to the invention the hardening time as well as the discharging time will be particularly short.

By the choice of the configuration of the at least partially displaceable support core system it can be determined, which shape the flexible lining can obtain when the subatmospheric pressure is applied underneath this lining. Because the discharge of the object takes place when the mould cavity, which is defined by the lining, and the upper discharge opening thereof are considerably enlarged, it is possible to manufacture very complicated objects, without any discharge problem arising. It is e.g. possible to apply undercut parts, or certain surface irregularities on the objects, without making the discharge of the objects more difficult.

A favourable embodiment of the method according to the invention is characterized in that a support core system is used, which consists of a displaceable portion and a stationary portion.

Further it is possible that the mould is vibrated, after the hardenable material is fed into the interior of the lining.

Because of the small height of the hardenable material in the flexible lining, when the mould is in the filling position, the air is very rapidly removed from the material, whereafter the subatmospheric pressure on the underside of the lining is released.

The vibration of the mould may be continued, until the displaceable portion of the support core system has been displaced to its highest position.

The displaceable portion of the support core system may be heated, if desired, which leads to a quicker hardening.

Because during the filling operation this displaceable portion of the support core system remains practically out of contact with the lining and therefore out of contact with the hardenable material, this displaceable portion can be continuously kept at a constant temperature, without the hardenable material already being heated during the filling step.

The invention further relates to a mould for forming objects from a hardenable material, in particular objects provided with ribs, such as open grids or grids closed on one side, adpated to be applied with the method described hereinbefore, comprising a housing, a flexible lining being held to the mould at least along its edge, while a vacuum pipe is connected to the housing, said mould according to the invention being characterized in that a support core system is accommodated in the housing, said support core system consisting of an upwardly and downwardly displaceable portion and a stationary portion, wherein a horizontal partition wall is formed in the housing, which partition wall supports the stationary portion of the support core system, while a plurality of vertical suspension rods are passed through openings in this partition wall and are connected on their lower side to a common actuating plate, which is movable upwardly and downwardly by an actuating member, these suspension rods being connected on their upper side to the displaceable portion of the support core system.

The flexible lining may have lower portions, which are undeformable.

The lower undeformable portions of the lining may be displaceable over a predetermined distance in the direction of movement of the displaceable portion of the support core system.

As an alternative the lower undeformable portions of the lining may be fixedly connected to the housing.

Further the flexible lining may comprise upper portions, which rest on the stationary portion of the support core system.

The flexible lining may be provided with a rigid edge portion along its circumference, which edge portion is hermetically sealed with respect to the housing along the entire circumference of the housing.

Therefore, due to the fact that the lining is rigid in one plane, it is prevented that a relatively heavy object could break, because of too great a deformation of the lining.

The invention will hereinafter be elucidated with reference to the drawings, which show embodiments by way of example of the mould according to the invention.

Fig. 1 is a cross-section of a first embodiment of the mould according to the invention in the filling position.

Fig. 2 is a cross-section corresponding with Fig. 1, in which the mould is, however, in the hardening position.

Fig. 3 is a cross-section corresponding with Figs. 1 and 2, in which the mould is in the discharging position.

Fig. 4 is a partial cross-section of a second embodiment of the mould according to the invention on a larger scale.

Fig. 5 is a top view of an embodiment of a grid-shaped object, which has been manufactured in a mould according to Figs. 1—3 or according to Fig. 4.

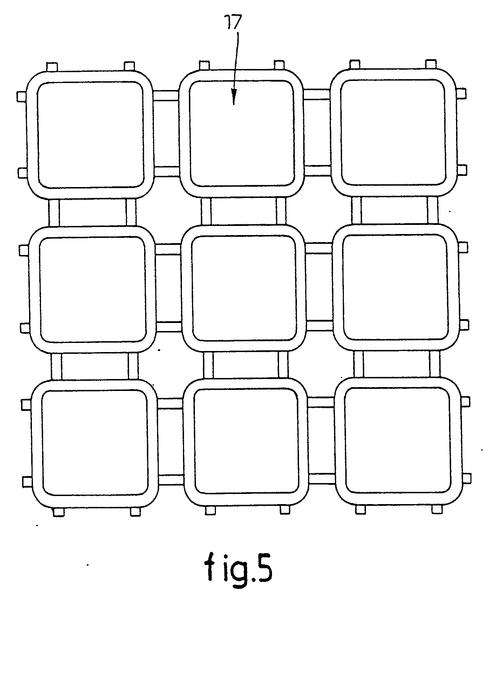

The drawings show two embodiments of a mould, which in particular serves for forming objects with ribs, such as open grids or grids closed on one side, from a hardenable fluid material, such as e.g. cement mortar or gypsum. Fig. 5 shows an example of such a grid.

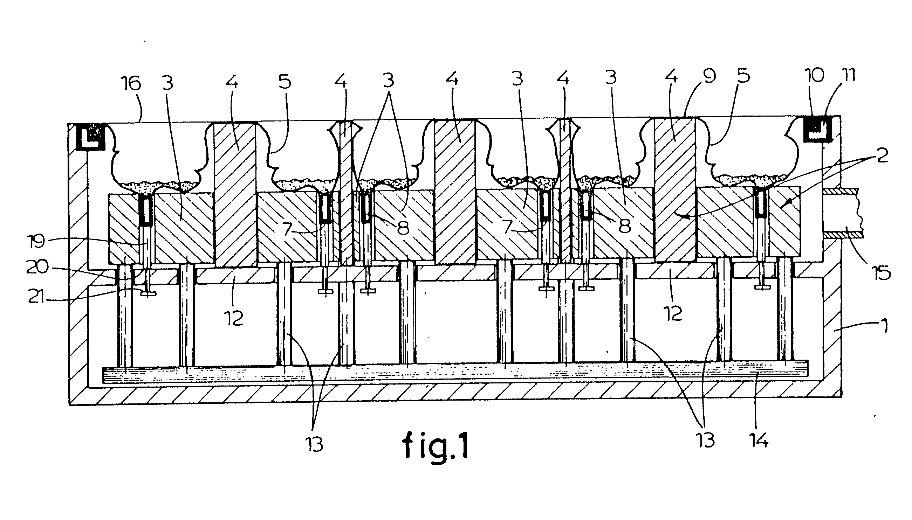

The mould according to Figs. 1—3 comprises a housing 1, in which a support core system 2 is accommodated, of which a displaceable portion 3 can be moved upwardly and downwardly, while the remaining portion 4 is stationary and is connected with the housing 1.

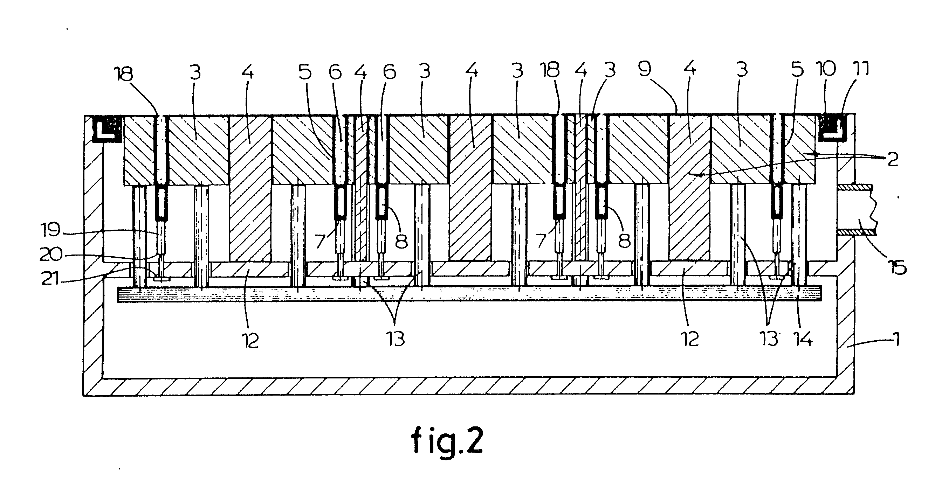

A flexible lining 5, which is formed in such a way, that the same, when fully unloaded, has an internal shape, which corresponds with the external shape of the object to be manufactured and which therefore, in this unloaded position, defines the mould cavity 6 (Fig. 2), has lower portions 7, which are undeformable, because metal bars 8 combined to a grid are vulcanized in these lower portions. The flexible lining 5 comprises upper portions 9, which rest on the stationary portion 4 of the support core system 2. Along its circumference the flexible lining 5 is further provided with a rigid edge portion 10, in which a metal frame 11 is received and which is connected to the housing 1 in an airtight manner along the entire circumference of the housing 1.

A horizontal partition wall 12 is formed in the housing 1, which partition wall 12 supports the stationary portion 4 of the support core system 2, while a plurality of vertical suspension rods 13 are fittingly passed through openings in this partition wall 12. These suspension rods 13 are connected on their lower side to a common actuating plate 14, which is displaceable upwardly and downwardly by an actuating member (not shown). The displaceable portion 3 of the support core system 2 is connected to the upper side of these vertical suspension rods 13 and may be moved upwardly and downwardly by displacing the actuating plate 14. Above the partition wall 12 a vacuum pipe 15 is connected to the housing 1, through which vacuum pipe 15 a subatmospheric pressure may be applied on the lower side of the flexible lining 5.

The undeformable lower portions 7 of the flexible lining 5 are connected to stop rods 19, which are fittingly passed through the horizontal partition wall 12 and which are provided with an upper stop 20 and a lower stop 21, which define the stroke of the upward and downward movement of the undeformable lower portions 7 of the flexible lining 5. The direction of the displacement of the lower undeformable portions 7 of the flexible lining 5 over a predetermined distance is the same as the direction of movement of the displaceable portion 3 of the support core system 2.

In Fig. 1 the mould is in its filling position. Through the vacuum pipe 15 a subatmospheric pressure is applied on the lower side of the flexible lining 5, while the movable portion 3 of the support core system 2 is displaced to its lowermost position by means of the actuating plate 14. The undeformable lower portions 7 of the flexible lining 5 are in their lowermost end position, wherein the upper stops 20 on the stop rods 19 rest on the partition wall 12.

In this filling position the space enclosed by the lining 5 is considerably larger than the mould cavity 6 (Fig. 2), which is used for forming the object by hardening the hardenable material.

As appears from Fig. 1, the upper filling opening 16 is very large, so that the supply of the hardenable material in a measured quantity can take place in this filling position of the mould in a very quick and simple manner.

Thereupon the mould is vibrated, so that a deaeration of the hardenable material is accomplished. This deaeration takes place very quickly, as a result of the small height of the hardenable material in the flexible lining 5.

After the hardenable material is sufficiently deaerated the subatmospheric pressure underneath the lining 5 is released and the movable portion 3 of the support core system 2 is moved upwardly by means of the actuating plate 14, until it has reached its uppermost position shown in Fig. 2. The undeformable lower portions 7 of the flexible lining 5 are also displaced to their uppermost end position, wherein the lower stops 21 on the stop rods 19 abut the lower side of the partition wall 12.

Hereafter the vibration of the mould is ended and the hardenable material in the lining 5 has obtained the shape of the object 17 to be formed.

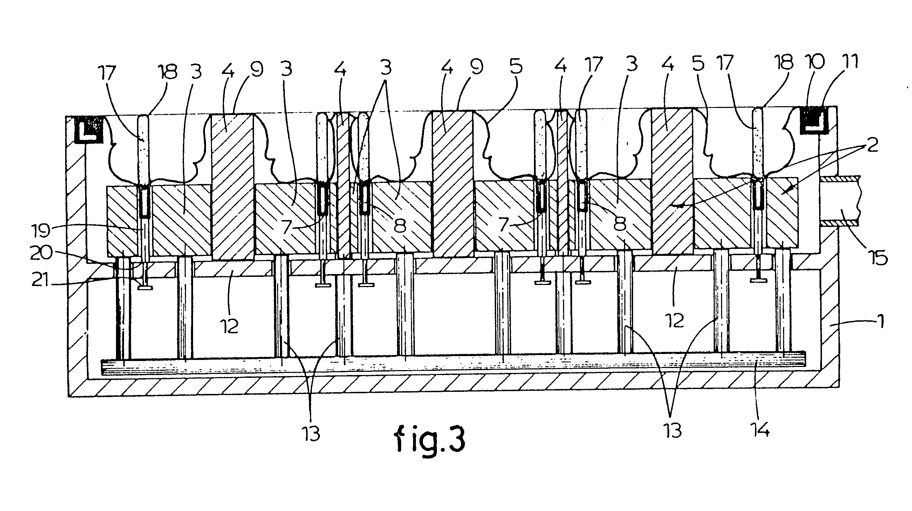

After a sufficient hardening of the hardenable material has taken place, the movable portion 3 of the support core system 2 is displaced downwardly within a few seconds by displacing the actuating plate 14, while further the subatmospheric pressure underneath the lining 5 is restored again (Fig. 3).

In this way the lining 5 is peeled from the object 17, which can take place with very low discharging forces.

The undeformable lower portions 7 of the flexible lining 5 are also displaced to their lowermost end position, which displacement supports the peeling of the flexible lining 5 from the object.

The mould may be vibrated after hardening of the hardenable material, but before the peeling operation, as well as during the peeling step until the removal of the formed object.

The movable portion 3 of the support core system 2 can be heated, if desired, which can lead to a further gain of time.

Rests of material, if any, can be very easily removed in the discharging position of the mould, while the application of a discharging oil or the like in the filling position can also be particularly simply realized.

The configuration of the object to be formed can be chosen at will. In the embodiment shown in the drawing by way of example the flexible lining 5 is shaped in such a manner, that the object may be provided with upper undercuts 18, which are formed in the two directions. This will prevent the forming of burrs. The shape of the flexible lining 5 may further be such that the surface of the object to be formed can show any desired pattern of irregularities, since this can no longer hamper the discharge of the object.

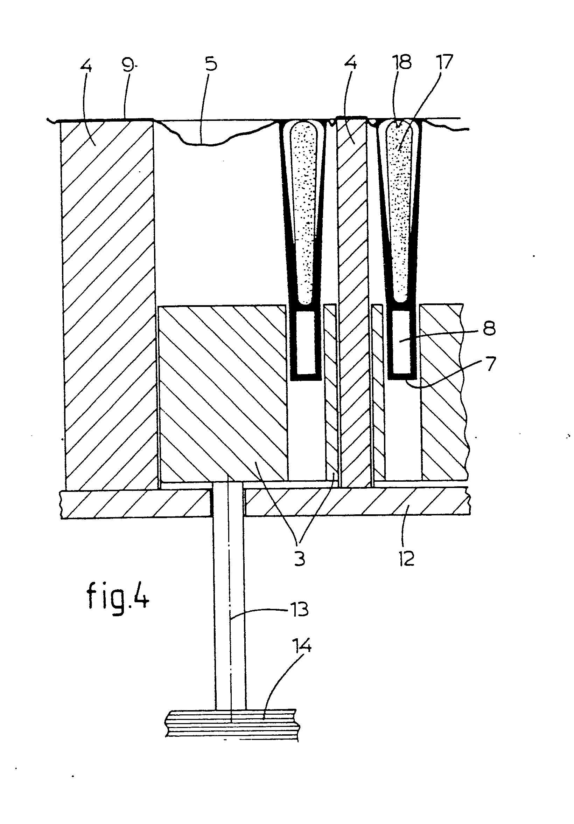

Fig. 4 shows a part of a second embodiment of the mould according to the invention. The main difference between this embodiment and the embodiment according to Figs. 1—3 consists in that the lower undeformable portions 7 of the flexible lining 5 are fixedly connected to the housing 1. Further this Fig. 4 again shows the undercuts 18.

In the embodiments shown the displaceable portion of the support core system 2 has side walls, which are parallel. As an alternative it is also possible that these side walls converge in the downward direction.

With the mould according to the invention the filling can take place in a very simple and quick manner, while a shorter hardening time is necessary and the object can be discharged very quickly. Therefore, this mould will lead to a great saving of time.

Further the hardenable material can comprise long fibres without any problem, which benefits the strength of the formed object.

The invention is not restricted to the embodiments shown in the drawings by way of example, which may be varied in several ways within the scope of the Patent claims.

**Claims**

1. Method for forming objects from a hardenable material in a mould, wherein the mould is provided with a deformable lining (5), which is held to the mould at least along its edge (10), in such a way that this flexible lining can be brought into two positions, i.e. into a first position, in which the mould is in a discharging or a filling position, and into a second position, in which the mould occupies a hardening position, in which hardening position of the mould the interior of the lining (5), which defines the mould cavity (6), corresponds with the external shape of the object to be formed, whilst in the discharging or the filling position of the mould both the internal space of the lining and its upper discharge or filling opening (16) are considerably larger than in the hardening position of the mould; in the discharging or the filling position of the mould a subatmospheric pressure being exerted on the lower side of the lining (5), while in order to bring the mould into the hardening position this subatmospheric pressure is released, characterized in that a support core system (2) accommodated in the mould is at least partially displaced upwardly when bringing the mould into the hardening position; the operation of the mould being such, that in the filling position of the mould the hardenable material is fed into the interior of the lining (5) and subsequently the subatmospheric pressure on the lower side of the lining is released and the lining (5) is brought into its second position by means of the at least partial upward displacement of the support core system (2), in which second position of the lining (5) the mould is in the hardening position, whereafter, after sufficient hardening of the hardenable material, the mould is brought into the discharging position by means of the at least partial downward displacement of the support core system (2) and the exertion of the subatmospheric pressure on the lower side of the lining, thus causing the lining (5) to be brought back into its first position.

2. Method according to claim 1, characterized in that a support core system (2) is used, which consists of a displaceable portion (3) and a stationary portion (4).

3. Method according to claim 1 or 2, characterized in that the mould is vibrated, after the hardenable material is fed into the interior of the lining (5).

4. Method according to claim 3, characterized in that the vibration of the mould is continued, until the displaceable portion (3) of the support core system (2) has been displaced to its highest position.

5. Method according to any one of the preceding claims, characterized in that the mould is vibrated after hardening of the hardenable material but before the discharge, as well as during the discharge until the removal of the formed object.

6. Method according to any one of the preceding claims, characterized in that the displaceable portion (3) of the support core system (2) is heated.

7. Mould for forming objects from a hardenable material, in particular objects provided with ribs, such as open grids or grids closed on one side, adapted to be applied with the method according to any one of the preceding claims, comprising a housing (1), a flexible lining (5) being held to the mould at least along its edge (10), while a vacuum pipe (15) is connected to the housing (1), characterized in that a support core system (2) is accommodated in the housing, said support core system (2) consisting of an upwardly and downwardly displaceable portion (3) and a stationary portion (4), wherein a horizontal partition wall (12) is formed in the housing (1), which partition wall (12) supports the stationary portion (4) of the support core system (2), while a plurality of vertical suspension rods (13) are passed through openings in this partition wall (12) and are connected on their lower side to a common actuating plate (14), which is movable upwardly and downwardly by an actuating member, these suspension rods (13) being connected on their upper side to the displaceable portion (3) of the support core system (2).

8. Mould according to claim 7, characterized in that the lining (5), if unloaded, occupies a position in which the interior of the lining corresponds with the external shape of the object to be formed.

9. Mould according to claim 7 or 8, characterized in that the flexible lining (5) has lower portions (7), which are undeformable.

10. Mould according to claim 9, characterized in that the lower undeformable portions (7) of the lining (5) are displaceable over a predetermined distance in the direction of movement of the displaceable portion (3) of the support core system (2).

11. Mould according to claim 9, characterized in that the lower undeformable portions (7) of the lining (5) are fixedly connected to the housing (1).

12. Mould according to any one of claims 7—11, characterized in that the flexible lining (5) has upper portions (9), which rest on the stationary portion (4) of the support core system (2).

13. Mould according to any one of claims 7—12, characterized in that the flexible lining (5) is provided with a rigid edge portion (10) along its circumference, which edge portion (10) is hermetically sealed with respect to the housing (1) along the entire circumference of the housing.

14. Mould according to any one of claims 7—13, characterized in that the displaceable portion (3) of the support core system (2) has side walls, which are parallel or which converge in the downward direction.

15. Mould according to any one of claims 7—14, characterized in that the flexible lining (5) is shaped in such manner that the object may be provided with undercuts (18) and/or irregularities of the surface.

**Patentansprüche**

1. Verfahren zum Formen von Gegenständen aus einem härtbaren Material in einer Form, wobei die Form eine flexible Einlage (5) aufweist, die mindestens entlang ihres Randes (10) mit der Form verbunden ist, derart, dass die flexible Einlage in zwei Stellungen gebracht werden kann, d.h. in eine erste Stellung, in welcher die Form in einer Entleer- oder Füllstellung ist, und in eine zweite Stellung, in welcher die Form eine zum Härten bestimmte Härtstellung einnimmt, wobei in der zweiten Stellung die Innenseite der Einlage (5), welche den Formhohlraum (6) definiert, der äusseren Oberfläche des zu formenden Gegenstandes entspricht, wobei in der ersten Stellung der Form sowohl der Innenraum der Einlage als auch ihre obere Entleer- oder Einfüllöffnung (16) erheblich grösser sind als in der zweiten Stellung der Form, und wobei in der ersten Stellung der Form ein Unterdruck auf die Unterseite der Einlage (5) ausgeübt wird, während zum Uebergang in die zweite Stellung der Form dieser Unterdruck abgebaut wird, dadurch gekennzeichnet, dass ein in der Form gehaltenes Stützkern-System (2) mindestens teilweise nach oben verschoben wird, wenn die Form in die zweite Stellung gebracht wird, wobei der Betrieb der Form derart ist, dass in der Füllstellung das härtbare Material ins Innere der Einlage (5) eingebracht, anschliessend der Unterdruck auf der Unterseite der Einlage abgebaut und die Einlage (5) durch mindestens teilweises Hochfahren des Stützkern-Systems (2) in ihre zweite Stellung gebracht wird, wobei in der zweiten Stellung der Einlage (5) die Form in der Härtstellung ist, und dass schliesslich nach ausreichendem Aushärten des härtbaren Materials die Form durch das mindestens teilweise Absenken des Stützkern-Systems (2) und Anlegen von Unterdruck auf die Unterseite der Anlage in die Entleerstellung gebracht wird, wodurch die Einlage in ihre erste Stellung gebracht wird.

2. Verfahren nach Anspruch 1, dadurch gekennzeichnet, dass ein Stützkern-System (2) verwendet wird, das aus einem beweglichen Teil (3) und einem stationären Teil (4) besteht.

3. Verfahren nach Anspruch 1 oder 2, dadurch gekennzeichnet, dass die Form nach dem Einbringen des härtbaren Materials ins Innere der Einlage (5) vibriert wird.

4. Verfahren nach Anspruch 3, dadurch gekennzeichnet, dass das Vibrieren fortgesetzt wird, bis der bewegliche Teil (3) des Stützkern-Systems (2) in seine oberste Stellung verschoben ist.

5. Verfahren nach einem der vorangehenden Ansprüche, dadurch gekennzeichnet, dass die Form nach dem Aushärten des härtbaren Materials jedoch vor dem Entformen, sowie während des Entformens und der Entfernung des Gegenstandes vibriert wird.

6. Verfahren nach einem der vorangehenden Ansprüche, dadurch gekennzeichnet, dass der bewegliche Teil (3) des Stützkern-Systems (2) beheizt wird.

7. Form zum Formen von Gegenständen aus einem härtbaren Material, insbesondere von Gegenständen mit Rippen, z.B. offene oder einseitig geschlossene Gitter, angepasst zur Durchführung des Verfahrens gemäss einem der vorangehenden Ansprüche, umfassend ein Gehäuse (1) und eine mindestens längs ihres Randes (10) mit der Form verbundene flexible Einlage (5), wobei ein Vakuumrohr (15) mit dem Gehäuse (1) verbunden ist, dadurch gekennzeichnet, dass im Gehäuse ein Stützkern-System (2) angeordnet ist, das aus einem aufwärts und abwärts beweglichen Teil (3) und einem stationären Teil (4) besteht, dass eine horizontale Trennwand (12) im Gehäuse (1) angeordnet ist, die den stationären Teil (4) des Stützkern-Systems (2) trägt, dass mehrere vertikale Stützstäbe (13) durch Oeffnungen in der Trennwand (12) geführt und an ihrem unteren Ende mit einer gemeinsamen Betätigungsplatte (14) verbunden sind, die durch ein Betätigungsglied aufwärts und abwärts bewegbar ist, und dass die Stützstäbe (13) an ihrer oberen Seite mit dem beweglichen Teil (3) des Stützkern-Systems (2) verbunden sind.

8. Form nach Anspruch 7, dadurch gekennzeichnet, dass die Einlage (5) im unbelasteten Zustand eine Stellung einnimmt, in welcher das Innere der Einlage der äusseren Form des herzustellenden Gegenstandes entspricht.

9. Form nach Anspruch 7 oder 8, dadurch gekennzeichnet, dass die flexible Einlage (5) untere Abschnitte (7) aufweist, die undeformierbar sind.

10. Form nach Anspruch 9, dadurch gekennzeichnet, dass die undeformierbaren unteren Abschnitte (7) der Einlage (5) über eine vorgegebene Distanz in Richtung der Bewegung des beweglichen Teils (3) des Stützkern-Systems (2) verschiebbar sind.

11. Form nach Anspruch 9, dadurch gekennzeichnet, dass die unteren undeformierbaren Abschnitte (7) der Einlage (5) fest mit dem Gehäuse (1) verbunden sind.

12. Form nach einem der Ansprüche 7 bis 11, dadurch gekennzeichnet, dass die flexible Einlage (5) obere Abschnitte (9) aufweist, die auf dem stationären Teil (4) des Stützkern-Systems (2) aufliegen.

13. Form nach einem der Ansprüche 7 bis 12, dadurch gekennzeichnet, dass die flexible Einlage (5) einen starren Randabschnitt (10) längs ihres Umfangs aufweist, und dass der Randabschnitt (10) längs des ganzen Umfangs des Gehäuses hermetisch gegenüber dem Gehäuse (1) abgedichtet ist.

14. Form nach einem der Ansprüche 7 bis 13, dadurch gekennzeichnet, dass der bewegliche Teil (3) des Stützkern-Systems (2) parallele oder nach unten konvergierende Seitenwände hat.

15. Form nach einem der Ansprüche 7 bis 14, dadurch gekennzeichnet, dass die flexible Einlage (5) derart geformt ist, dass der Gegenstand Hinterschneidungen (18) und/oder Unregelmässigkeiten auf der Oberfläche aufweisen kann.

**Revendications**

1. Procédé pour former des objets à partir
d'une matière durcissable dans un moule, dans
lequel le moule comporte au moins une doublure déformable (5) qui est maintenue sur le
moule au moins le long de son bord (10), de
manière que cette doublure flexible puisse être
amenée dans deux positions, à savoir une première position dans laquelle le moule est en
position de déchargement ou de remplissage, et
une seconde position dans laquelle le moule
occupe une position de durcissement, position
de durcissement dans laquelle l'intérieur de la
doublure (5), qui définit la cavité (6) du moule,
correspond à la forme extérieure de l'objet à
former, tandis que, dans la position de déchargement ou de remplissage du moule, l'espace intérieur de la doublure et son ouverture supérieure
(16) de déchargement ou de remplissage sont
tous deux beaucoup plus grands que dans la
position de durcissement du moule; dans la
position de déchargement ou de remplissage du
moule, une pression inférieure à celle de l'atmosphère étant exercée sur le côté inférieur de la
doublure (5), tandis que cette pression inférieure
à celle de l'atmosphère est relâchée pour amener
le moule dans la position de durcissement,
caractérisé en ce qu'un système (2) de noyau de
support, logé dans le moule, est au moins
partiellement déplacé vers le haut lorsque le
moule est amené dans la position de durcissement; le fonctionnement du moule étant tel que,
dans la position de remplissage du moule, la
matière durcissable est chargée à l'intérieur de la
doublure (5), puis la pression inférieure à celle de
l'atmosphère appliquée sur le côté inférieur de la
doublure est relâchée et la doublure (5) est amenée dans sa seconde position au moyen du
déplacement, au moins partiel, vers le haut du
système (2) de noyau de support, seconde position de la garniture (5) dans laquelle le moule est
dans la position de durcissement, après quoi,
après un durcissement suffisant de la matière
durcissable, le moule est amené dans la position
de déchargement au moyen du déplacement
vers le bas, au moins partiel, du système (2) de
noyau de support et de l'application de la pression inférieure à celle de l'atmosphère sur le côté
inférieur de la doublure, provoquant ainsi le
retour de la doublure (5) dans sa première position.

2. Procédé selon la revendication 1, caractérisé
en ce qu'il est utilisé un système (2) de noyau de
support qui est constitué d'une partie mobile (3)
et d'une partie fixe (4).

3. Procédé selon la revendication 1 ou 2, caractérisé en ce que le moule est mis en vibration
après que la matière durcissable a été chargée à
l'intérieur de la doublure (5).

4. Procédé selon la revendication 3, caractérisé
en ce que la vibration du moule est poursuivie jusqu'à ce que la partie mobile (3) du système (2)
de noyau de support ait été amenée dans sa
position la plus haute.

5. Procédé selon l'une quelconque des revendications précédentes, caractérisé en ce que le
moule est mis en vibration après le durcissement
de la matière durcissable, mais avant le
déchargement, ainsi que pendant le déchargement jusqu'à ce que l'objet formé soit retiré.

6. Procédé selon l'une quelconque des revendications précédentes, caractérisé en ce que la
partie mobile (3) du système (2) de noyau de
support est chauffée.

7. Moule pour former des objets à partir d'une
matière durcissable, en particulier des objets
comportant des nervures, tels que des grilles
ouvertes ou des grilles fermées sur un côté,
conçu pour être utilisé avec le procédé selon
l'une quelconque des revendications précédentes, comprenant un corps (1), une doublure
flexible (5) maintenue sur le moule au moins le
long de son bord (10), tandis qu'un tuyau à vide
(15) est raccordé au corps (1), caractérisé en ce
qu'un système (2) de noyau de support est logé
dans le corps, ledit système (2) de noyau de
supprt étant constitué d'une partie (3) mobile
vers le haut et vers le bas et d'une partie fixe (4),
une cloison horizontale (12) étant formée dans le
corps (1), laquelle cloison (12) supporte la partie
fixe (4) du système (2) de noyau de support,
tandis que plusieurs tiges verticales (13) de suspension passent dans des ouvertures de cette
cloison (12) et sont reliées, sur leur côté inférieur,
à une plaque commune (14) d'actionnement qui
peut être déplacée vers le haut et vers le bas par
un élément d'actionnement, ces tiges (13) de
suspension étant reliées, sur leur côté supérieur,
à la partie mobile (3) du système (2) de noyau de
support.

8. Moule selon la revendication 7, caractérisé
ce que la doublure (5), lorsqu'elle est déchargée,
occupe une position dans laquelle l'intérieur de
la doublure correspond à la forme extérieure de
l'objet à former.

9. Moule selon la revendication 7 ou 8, caractérisé en ce que la doublure flexible (5) comporte
des parties inférieures (7) qui sont indéformables.

10. Moule selon la revendication 9, caractérisé
en ce que les parties inférieures indéformables
(7) de la doublure (5) sont mobiles sur une
distance prédéterminée dans la direction du
mouvement de la partie mobile (3) du système
(2) de noyau de support.

11. Moule selon la revendication 9, caractérisé
en ce que les parties inférieures indéformables
(7) de la doublure (5) sont reliées fixement au
corps (1).

12. Moule selon l'une quelconque des revendications 7—11, caractérisé en ce que la doublure flexible (5) comporte des parties supérieures (9) qui reposent sur la partie fixe (4) du
système (2) de noyau de support.

13. Moule selon l'une quelconque des revendications 7—12, caractérisé en ce que la doublure flexible (5) comporte une partie de bord rigide (10) le long de sa circonférence, laquelle partie de bord (10) est scellée hermétiquement au corps (1) sur toute la circonférence du corps.

14. Moule selon l'une quelconque des revendications 7—13, caractérisé en ce que la partie mobile (3) du système (2) de noyau de support comporte des parois latérales qui sont parallèles ou qui convergent vers le bas.

15. Moule selon l'une quelconque des revendications 7—14, caractérisé en ce que la doublure flexible (5) est configurée de manière que l'objet puisse être muni de contre-dépouilles (18) et/ou d'irrégularités de surface.

fig.1

fig.2

0 149 276

fig.3

0 149 276

fig.4

fig.5